# EUROPEAN PATENT SPECIFICATION

(11) **EP 2 917 549 B1**
(45) Date of publication and mention of the grant of the patent: **21.09.2016**
(21) Application number: 13786273.6
(22) Date of filing: 06.11.2013
(51) Int. Cl.: F02M 25/022, B01F 3/08

(54) **A MACHINE FOR EMULSIFYING FUEL OILS WITH WATER**
MASCHINE ZUM EMULGIEREN VON BRENNSTOFFÖLEN MIT WASSER
MACHINE POUR ÉMULSIFIER DES HUILES DE CARBURANT AVEC DE L'EAU

(30) Priority: 09.11.2012 IT AN20120149
(43) Date of publication of application: 16.09.2015
(73) Proprietor: Microsystemfuel S.r.l., 00169 Roma (IT)
(72) Inventor: CIARALLA, Enrico, I-05100 Terni (TR) (IT)
(74) Representative: Baldi, Claudio
(86) International application number: PCT/EP2013/073114
(87) International publication number: WO 2014/072316

(56) References cited:
- DE-A1- 3 123 743
- GB-A- 2 487 602
- US-A- 6 019 499
- US-A1- 2004 089 746

## Description

The present patent application for industrial invention relates to a machine for emulsifying fuel oils with water.

The microemulsion of fuel oils with water is a common practice because the presence of water in the fuel determines the cooling of the combustions chamber and of the injection nozzles, thus reducing nitrogen oxides in the fumes.

In the machines of known type the emulsifying effect is obtained by shaking the mixture, causing the overheating of the mixture itself; it has been noted that the emulsified product has short stability, meaning that separation between the two non-mixable components is generated after a few minutes.

A machine for emulsifying fuel and water by means of a centrifugal forces generated by a rotating drum is known form DE 31 23 743 A1.

Other emulsifying machines use high-pressure pumps and magnetic transducers. This type of machines is used on board ships for industrial motors for electricity production.

One of the main drawbacks of this type of emulsifying machines is that they can only operate with osmotic water in percentage not higher than 10% in the mixture, and require a chemical binding agent to keep water and oil together.

The purpose of the present invention is to devise a new machine for emulsifying fuel oils with water, which is not impaired by the aforesaid drawbacks.

Another purpose of the present invention is to devise a new machine for emulsifying fuel oils with water, which is adapted to increase the calorific value of the fuel oil as never before.

This achievement is indirectly translated into a higher thermal output of the boiler or endothermic motor powered by the mixture emulsified by the machine of the invention. Additional advantages can be appreciated in terms of lower air pollution because of the reduction of fine particles, nitrogen oxides and carbon oxides in the fumes.

The aforementioned purposes are obtained by the emulsifying machine of the invention, the primary and secondary characteristics of which are described in the attached first claim and in the following claims that depend or sub-depend from the first claim.

In the machine of the invention the emulsifying effect is obtained by subjecting the mixture to very high pressure values of approximately 900 bar, without using expensive and complicated high-pressure pumps, but by simply centrifugating the mixture in a cylindrical rotary drum where the mixture is introduced in the center of the drum and the emulsified product gets out in periphery, after undergoing a cavitation phenomenon, by means of which the pressure values decrease to values lower than 500-600 bar. However, the most important effect of said cavitation is to cause the resolution of the water molecule with consequent stable formation of nitrogen and oxygen in free state that, as such, improve the quality of combustion and increase the calorific value of the emulsified fuel oil. The emulsifying machine of the invention comprises a cylindrical drum that rotates inside a stator case, formed of a cylindrical casing, a first upper cover and a second lower cover.

The upper cover is provided with a central nozzle for inlet of oil-water mixture into said case, whereas the lower cover is provided with a hole for the shaft with vertical axis that supports said drum in upper position, which is characterized in that it is provided with a regularly spaced radial series of centrifugation conduits that are joined in the proximity of their peripheral end with channels with lower diameter, adapted to convey mixture into the passage interposed between the lower wall of the drum and the internal wall of the lower cover of the case.

Said strong cavitation phenomenon is generated in correspondence of said passage, it being generated by the presence of two series of corresponding cavities, respectively obtained on the lower wall of the drum and the internal wall of the lower cover.

The emulsified product coming out from said cavitation process returns from said passage into the annular space defined by the internal wall of said cylindrical casing and by the cylindrical lateral wall of said drum, finally coming out of said case through holes suitably obtained on said cylindrical casing.

While passing through said passage the emulsified product tends to extend and become stable after the stress of the cavitation phase, returning to positive pressure values of 2-4 bar after being abruptly subject to depressions of 500-600 bar.

Finally, attention is drawn on the fact that the internal wall of said cylindrical casing and the lateral cylindrical wall of said drum are provided with two series of cavities that, when mutually interfaced, during the rotation of the drum, cooperate to generate a sort of suction effect on the emulsified product that is sucked by the rotating cavities obtained on the lateral wall of the drum, which are empty and pass in front of the fixed cavities obtained on the internal wall of the cylindrical casing at high speed.

In said annular space the mixed product can be added with oxygen or other gaseous substances adapted to improve combustion, such as nitrogen, introduced into the case through holes suitably obtained on said cylindrical casing.

For explanatory reasons, the description of the machine of the invention continues with reference to the attached drawings, which only have an illustrative, not limiting value, wherein:
- Fig. 1 is a view of the machine of the invention with its case sectioned with a plane passing by the axis of rotation of the drum housed in said case;

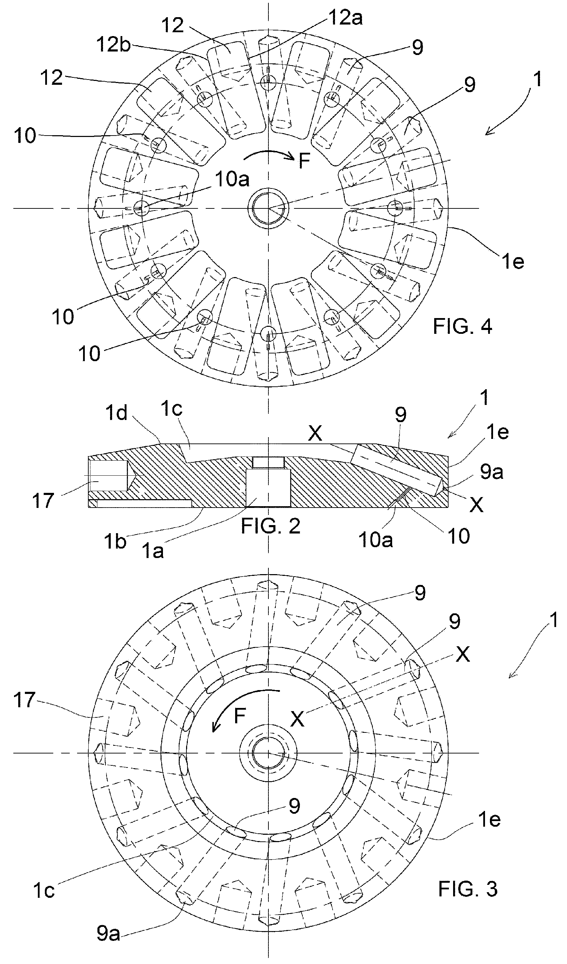

- Fig. 2 is a view of said drum sectioned by a plane passing by its axis of rotation;
- Fig. 3 is a top plan view of the drum;
- Fig. 4 is a bottom plan view of the drum;

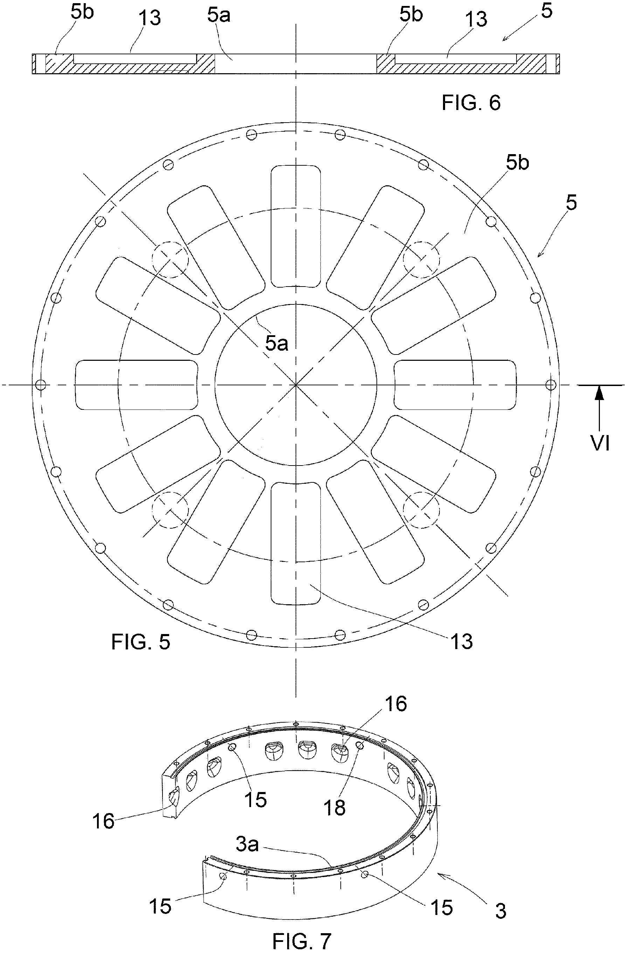

- Fig. 5 is a plan view of the internal wall of the lower lid of the case
- Fig. 6 is a view of the lower cover of the case sectioned with the plane VI-Vi of Fig. 5.
- Fig. 7 is an axonometric view of the cylindrical casing of said case, after removing a short section to show the sectioned profile of the cavities obtained on its internal wall.

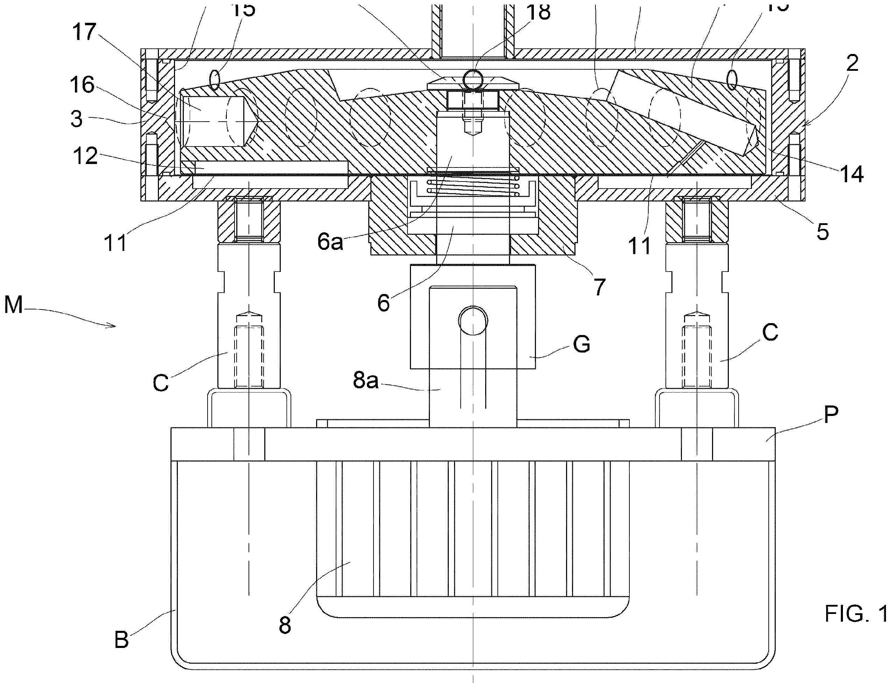

Referring to Fig. 1, the emulsifying machine (M) of the invention comprises a cylindrical drum (1) that is housed and rotates inside a stator case (2) formed of a cylindrical casing (3), a first circular upper cover (4) and a second circular lower cover (5).

A central nozzle (4a) is provided on the upper cover (4) to introduce the oil-water mixture inside the case (2), whereas a hole (5a) is obtained on the lower cover (5) for passing the shaft (6) with vertical axis that supports said drum (1) on top.

More precisely, said hole (5a) hermetically houses the assembly (7) of the mechanical seal of said shaft (6), driven into rotation by a motor (8) disposed at the base of the support frame of said case (2).

Said frame comprises a box base (B) that contains said motor (8) and support a platform (P), from which a series of columns (C) that support the stator case (2).

Fig. 1 is a diagrammatic view of the connection joint (G) between the shaft (6) of the rotor (1) and the shaft (8a) of the motor (8).

Finally, it must be noted that said drum (1) is provided with a central hole (1 a) wherein the upper pin (6a) of the shaft (6) is inserted and the screw (6b) used to fix the drum (1) to the shaft (6) is engaged.

The drum (1) is characterized in that it is provided with a regularly spaced radial series of centrifugation conduits (9), the axis (X) of which is tilted backwards with respect to a perfectly radial direction with respect to the direction of rotation of the drum, indicated by the arrow (F).

In the proximity of their peripheral end (9a) said conduits (9) are joined with channels (10) with smaller diameter (ten times smaller), adapted to convey the mixture into the passage (11) interposed between the lower wall (1 b) of the drum (1) and the internal wall (5b) of the lower cover (5) of the case (2).

Said channels (10) end with an enlarged outlet mouth (10a).

It must be noted that said passage is preferably of 0.20 mm.

Said centrifugal conduits (9) branch off from the same tub (1c) obtained in the center of the upper wall (1d) of the drum (1), ending in proximity of its lateral cylindrical wall (1 e).

Said channels (10) are directed downwards and inclined towards the center, in such manner that the mixture passing through them is forced to move along a centripetal route, in spite of being subject to a very strong centrifugal thrust, thus increasing turbulence in said mixture and consequently the emulsifying effect.

By making the drum rotate at a speed of 5000 rpm, it is possible to measure a pressure of 1000 bar in said end (9a), with the drum (1) having a diameter of 300 mm, the centrifugation conduits (9) having a diameter of 18 mm and the channels (10) having a diameter of 2 mm. The lower wall (1 b) of the drum (1) is provided with a regularly spaced series of cavities (12), preferably with square shape and with longitudinal axis disposed in radial position with respect to the drum (1).

For the sake of convenience, said cavities (12) can be defined as rotor cavities (12) since they rotate with the drum (1).

The internal wall (5b) of the lower cover (5) is provided with a series of cavities (13) that correspond to said cavities (12).

For the sake of convenience, said cavities (13) can be defined as stator cavities (13) since they are obtained on the stator case (2).

The emulsified mixture coming out from the channels (10) tends to fill the stator cavities (13), from which it is abruptly and rhythmically sucked at every passage of the empty rotor cavities (12).

In view of the high number of revolutions of the drum (1), the product contained in said stator cavities (13) undergoes a cavitation phenomenon, which is so strong to cause the resolution of the water molecule with consequent stable formation of nitrogen and oxygen in free state.

The depression measured inside said stator cavities is 500-600 bar when the drum rotates at 5000 rpm, with the drum (1) having a diameter of 300 mm, the centrifugation conduits (9) having a diameter of 18 mm and the channels (10) having a diameter of 2 mm.

In order to increase the effect of said cavitation effect, a different projection is given to the two longitudinal borders of each rotor cavity (12) as illustrated below.

It must be noted that each cavity (12) is provided with a front border (12a) and a back border (12b) with respect to the rotation direction of the drum (1) indicated by the arrow (F).

The back border (12b) protrudes more with respect to the lower wall (1 b) of the drum (1) than the front border (12a).

More precisely, the back border (12b) projects through the passage (11) until it grazes the internal wall (5b) of the lower cover (5).

The emulsified product coming out from said cavitation process returns from said passage (11) into the annular space (14) defined by the internal wall (3a) of said cylindrical casing (3) and by the cylindrical lateral wall (1 e) of said drum (1), coming out of said case (2) through holes (15) suitably obtained on said cylindrical casing (3).

While passing through said passage (11) the emulsified product tends to extend and become stable after the stress of the cavitation phase.

Finally, attention is drawn on the fact that the internal wall (3a) of said cylindrical casing (3) is provided with a series of cavities (16), and the lateral wall (3e) of the drum (1) is provided with a series of cavities (17) deeper than the cavities (16).

When said cavities (16 and 17) are mutually interfaced, during the rotation of the drum (1), the same cavities (16 and 17) cooperate and generate a sort of suction effect on the emulsified product contained in the passage (11), which is sucked by the rotating cavities (17) that are empty and pass in front of the fixed cavities (16) at high speed.

In said annular space (11) the mixed product can be added with oxygen or other gaseous substances adapted to improve combustion, such as nitrogen, introduced into the case through holes (18) suitably obtained on said cylindrical casing (3).

Although in the foregoing description the drum (1) rotates around a vertical axis, the machine of the invention can effectively work also with a horizontal axis of rotation for the drum, while still falling into the inventive concept and protection scope of the patent.

## Claims

1. A machine for emulsifying fuel oils with water, comprising
- a hermetically closed stator case (2) formed of a first circular upper cover (4) centrally provided with a nozzle (4a) for inlet of oil-water mixture,
a second circular lower cover (5) and a cylindrical casing (3) with holes (15) for outlet of emulsified product;
- a cylindrical drum (1) contained and rotating inside said case (2), being driven by a shaft (6) coupled with a motor (8), and provided with a regularly spaced radial series of centrifugal conduits (9), **characterized in that** said centrifugal conduits (9) are joined in proximity of their peripheral ends (9a) with channels (10) with lower diameter, adapted to convey mixture into a passage (11) interposed between a lower wall (1 b) of drum (1) and an internal wall (5b) of lower cover (5) of case (2).

2. The machine of the preceding claim, **characterized in that** the lower wall (1 b) of drum (1) is provided with a regularly-spaced series of cavities (12), and likewise the internal wall (5b) of lower cover (5) is provided with a series of cavities (13) corresponding to said cavities (12).

3. The machine of the preceding claim, **characterized in that**, in each cavity (12), the back edge (12b) with respect to the revolving direction of drum (1) protrudes more than the front edge (12a) from lower wall (1 b) of drum (1).

4. The machine of one of the preceding claims, **characterized in that** said centrifugal conduits (9) branch off from the same tub (1c) obtained in the center of the upper wall (1d) of the drum (1), ending in proximity of its lateral cylindrical wall (1 e).

5. The machine of one of the preceding claims, **characterized in that** said centrifugal conduits (9) have longitudinal axis (X) with backward inclination with respect to a perfectly radial direction and with respect to the revolving direction of drum (1).

6. The machine of one of the preceding claims, **characterized in that** internal wall (3a) of said cylindrical coating (3) is provided with a series of cavities (16).

7. The machine of the preceding claim, **characterized in that** the lateral cylindrical wall (1e) of said drum (1) is provided with a series of cavities (17) interfaced with said cavities (16) during rotation of drum (1).

8. The machine of the preceding claim, **characterized in that** said cylindrical coating (3) is provided with one or more holes (18) for introduction of substances inside case (2) in order to improve combustion of emulsified product.

## Patentansprüche

1. Maschine zum Emulgieren von Brennöl mit Wasser, umfassend:
- ein hermetisch geschlossenes Statorgehäuse (2), bestehend aus einem ersten, kreisförmigen, oberen Deckel (4), der mittig mit einem Stutzen (4a) für den Einlass des Öl-Wasser-Gemischs versehen ist, einem zweiten, kreisförmigen, unteren Deckel (5) und einem zylindrischen Mantel (3) mit Löchern (15) für den Auslass des emulgierten Produkts;
- eine zylindrische Trommel (1), die in dem Gehäuse (2) eingeschlossen ist, von einer Welle (6) angetrieben wird, die mit einem Motor (8) verbunden ist, und mit einer Reihe von radialen, regelmäßig beabstandeten Zentrifugenkanälen (9) versehen ist,
**dadurch gekennzeichnet, dass**
die Zentrifugenkanäle (9) in der Nähe ihres peripheren Endes (9a) mit jeweiligen Kanälen (10) kleineren Durchmessers verbunden sind, die dazu geeignet sind, die Mischung in einen Schlitz (11) zwischen einer unteren Wand (1b) der Trommel (1) und einer Innenwand (5b) des unteren Deckels (5) des Gehäuses (2) zu leiten.

2. Maschine nach dem vorstehenden Anspruch, **dadurch gekennzeichnet, dass** auf der unteren Wand (1b) der Trommel (1) eine Reihe von regelmäßig beabstandeten Hohlräumen (12) herausgearbeitet ist, ebenso wie auf der Innenwand (5b) des unteren Deckels (5) eine Reihe von Hohlräumen (13) herausgearbeitet ist, die den zuvor genannten Hohlräumen (12) entsprechen.

3. Maschine nach dem vorstehenden Anspruch, **dadurch gekennzeichnet, dass** im Inneren eines jeden Hohlraums (12) die hintere Kante (12b) - mit Bezug auf die Drehrichtung der Trommel (1) - aus der unteren Wand (1 b) der Trommel (1) mehr auskragt als die vordere Kante (12a).

4. Maschine nach einem der vorstehenden Ansprüche, **dadurch gekennzeichnet, dass** die Zentrifugenkanäle (9) allesamt von derselben Wanne (1c) abgehen, die im Mittelpunkt der oberen Wand (1d) der Trommel (1) herausgearbeitet ist und in der Nähe ihrer zylindrischen Seitenwand (1 e) enden.

5. Maschine nach einem der vorstehenden Ansprüche, **dadurch gekennzeichnet, dass** die Zentrifugenkanäle (9) eine Längsachse (X) aufweisen, die mit Bezug auf eine perfekt radiale Richtung und auf die Drehrichtung der Trommel (1) nach hinten geneigt ist.

6. Maschine nach einem der vorstehenden Ansprüche, **dadurch gekennzeichnet, dass** auf der Innenwand (3a) des zylindrischen Mantels (3) eine Reihe von Hohlräumen (16) herausgearbeitet ist.

7. Maschine nach dem vorstehenden Anspruch, **dadurch gekennzeichnet, dass** auf der zylindrischen Seitenwand (1 e) der Trommel (1) eine Reihe von Hohlräumen (17) herausgearbeitet ist, die sich während der Drehung der Trommel (1) mit den Hohlräumen (16) koppeln.

8. Maschine nach dem vorstehenden Anspruch, **dadurch gekennzeichnet, dass** auf dem zylindrischen Mantel (3) ein oder mehrere Löcher (18) zum Einführen von Stoffen ins Innere des Gehäuses (2) herausgearbeitet sind, die in der Lage sind, die Verbrennung des emulgierten Produkts zu verbessern.

## Revendications

1. Machine pour émulsionner des huiles combustibles avec de l'eau, comprenant :
- un boîtier de stator (2), hermétiquement fermé, formé d'un premier couvercle circulaire supérieur (4), doté centralement d'un embout (4a) d'entrée du mélange huile-eau, d'un second couvercle circulaire inférieur (5) et d'un manteau cylindrique (3), muni d'orifices (15) pour la sortie du produit émulsionné ;
- un tambour cylindrique (1) qui est enfermé et tourne, entraîné par un arbre (6) associé à un moteur (8) qui présente une série radiale, régulièrement espacée, de conduits de centrifugation (9),
**caractérisée en ce que**
lesdits conduits de centrifugation (9) se raccordent, à proximité de leur extrémité périphérique (9a), à des canaux respectifs (10), ayant un diamètre mineur, aptes à transporter le mélange dans un méat (11) interposé entre une paroi inférieure (1b) du tambour (1) et une paroi intérieure (5b) du sous-jacent couvercle inférieur (5) du boîtier (2).

2. Machine selon la revendication précédente, **caractérisée en ce que** sur la paroi inférieure (1b) du tambour (1), une série régulièrement espacée de cavités (12) est réalisée, tout comme sur la paroi intérieure (5b) du couvercle inférieur (5) sur lequel une série de cavités (13) est réalisée, cavités conformes et correspondantes aux susdites cavités (12).

3. Machine selon la revendication précédente, **caractérisée en ce que**, au sein de chaque cavité (12), le bord postérieur (12b), par rapport au sens de rotation du tambour (1) a une saillie majeure, par rapport au bord antérieur (12a), de la paroi inférieure (1 b) du tambour (1).

4. Machine selon la revendication précédente, **caractérisée en ce que** lesdits conduits de centrifugation (9) se ramifient tous à partir d'une même cuve (1c), réalisée au centre de la paroi supérieure (1d) du tambour (1) et terminent à proximité de sa paroi latérale cylindrique (1 e).

5. Machine selon l'une des revendications précédentes, **caractérisée en ce que** lesdits conduits de centrifugation (9) présentent un axe longitudinal (X) incliné vers l'arrière par rapport à une direction parfaitement radiale et par rapport au sens de rotation du tambour (1).

6. Machine selon l'une des revendications précédentes, **caractérisée en ce que** sur la paroi intérieure (3a) du dit manteau cylindrique (3), une série de cavités (16) est réalisée.

7. Machine selon la revendication précédente, **caractérisée en ce que** sur la paroi latérale cylindrique (1e) du dit tambour (1), une série de cavités (17) est réalisée, cavités qui s'interfacent, pendant la rotation du tambour (1), avec les susdites cavités (16).

8. Machine selon la revendication précédente, **caractérisée en ce que** sur ledit manteau cylindrique (3) sont réalisés un ou plusieurs orifices (18) pour l'introduction, au sein du boîtier (2), de substances en mesure d'améliorer la combustion du produit émulsionné.
